# EUROPÄISCHE PATENTSCHRIFT

(11) **EP 2 114 834 B1**
(45) Veröffentlichungstag und Bekanntmachung des Hinweises auf die Patenterteilung: **11.04.2012**
(21) Anmeldenummer: 08715510.7
(22) Anmeldetag: 20.02.2008
(51) Int. Cl.: C03B 9/41

(54) **VERFAHREN UND EINRICHTUNG ZUR ÜBERWACHUNG VON GLASARTIKELN**
METHOD AND DEVICE FOR MONITORING GLASS ITEMS
PROCÉDÉ ET DISPOSITIF POUR SURVEILLER DES ARTICLES EN VERRE

(30) Priorität: 21.02.2007 DE 102007008958
(43) Veröffentlichungstag der Anmeldung: 11.11.2009
(73) Patentinhaber: Geisel, Hartmut, 31683 Obernkirchen (DE)
(72) Erfinder: Geisel, Hartmut, 31683 Obernkirchen (DE)
(74) Vertreter: Seewald, Jürgen
(86) Internationale Anmeldenummer: PCT/DE2008/000318
(87) Internationale Veröffentlichungsnummer: WO 2008/101492

(56) Entgegenhaltungen:
- DE-A1- 4 224 540
- DE-A1- 10 030 649
- DE-C1- 3 208 976
- US-A1- 2005 189 267

## Beschreibung

Die vorliegende Erfindung betrifft ein Verfahren gemäß dem Oberbegriff des Anspruchs 1 bzw. eine Einrichtung gemäß dem Oberbegriff des Anspruchs 4.

Bei der Produktion von Glasartikeln werden an einer so genannten IS-Glasformmaschine Posten schmelzflüssigen Glases von einem aus einem Speiser austretenden Strang abgetrennt und über einen Tropfenverteiler und über ein Rinnensystem abwechselnd verschiedenen Produktionseinheiten, auch Sektionen genannt, der IS-Glasformmaschine zugeführt.

Eine IS-Glasformmaschine besteht aus mehreren, parallel arbeitenden Produktionseinheiten, so genannten Sektionen, da der Herstellungsprozess innerhalb der einzelnen Produktioneinheiten vergleichsweise länger dauert, als die übrigen Produktionskapazitäten der Gesamtanlage, die von den Artikeln durchlaufen werden. Jede der Sektionen verfügt über eigenständige Mechanismen, unter anderem eine Form zur Formgebung des Glasartikels, die gewartet, justiert und ggf. ausgetauscht werden müssen. Um nach der Herstellung noch feststellen zu können, aus welcher dieser Sektionen bzw. aus welcher Form der jeweilige Glasartikel stammt, hat jede Form eine unterschiedliche Gravur. Diese Gravur ist nach dem Herstellungsprozess auf dem Hohlglasartikel entweder in Schrift oder als Punktmuster zu erkennen. Alle Glasartikel aus einer Sektion, die mit der gleichen Form hergestellt wurden, tragen somit die gleiche Gravur. Bis eine Form ausgetauscht wird, entstehen auf diese Weise tausende Glasartikel mit der gleichen Gravur.

Die einzelnen Sektionen arbeiten zeitlich versetzt mit gleichen Arbeitstakten, d. h., die geformten Glasartikel verlassen die IS-Glasformmaschine, bezogen auf die Sektionen, immer in der gleicher Reihenfolge. Aus den Sektionen gelangen die Glasartikel auf ein gemeinsames Transportband, auf dem sie demzufolge immer in der gleichen Reihenfolge transportiert werden. Das Transportband führt die Glasartikel einem Durchlauf-Abkühlofen zu. In diesem werden die Glasartikel gekühlt und entspannt. Am Ende des Durchlauf-Abkühlofens ist der Herstellungsprozess abgeschlossen. Die Glasartikel werden dort über Tische und Transportbänder nicht mehr synchron zum ursprünglichen Herstellungsprozess zu Kontrollmaschinen gefördert. Die Kontrollmaschinen prüfen die Glasartikel nach verschiedenen Kriterien auf Defekte. Sie sind mit Formnummern-Lesegeräten ausgestattet. Auf diese Weise kann dokumentiert werden, welche Form und somit welche Sektion welchen Fehler erzeugt hat. Jedoch ist es auf diese Weise nicht möglich, einem Glasartikel die exakte Uhrzeit seiner Herstellung in der IS-Glasformmaschine und die dabei herschenden Betriebsbedingungenden zuzuordnen, weil eine Vielzahl von Glasartikel, die aus einer entsprechenden Sektion stammen, die gleiche Formnummer tragen, und auf dem Weg bis zu den Kontrollmaschinen vermischt werden und damit dort nicht mehr synchron zum Herstellungsprozess eintreffen. Bisher existieren also nur die Informationen der Kontrollmaschinen am Ende der Herstellung, wie viele Artikel einer Sektion aus welchem ungefähren Zeitfenster defekt sind. Ein derartiger Stand der Technik geht beispielsweise aus der DE 32 08976 C1 und der DE 4224540 C2 hervor.

Neben den IS-Glasformmaschinen sind auch Rundtisch-Glasformmaschinen im Einsatz, aber in weit geringerer Anzahl. Auch diese Maschinen weisen mehrere Produktionseinheiten auf, die auf einem sich drehenden Rundtisch angeordnet sind, von dem die produzierten Glasartikel in der Reihenfolge ihrer Herstellung , also auch in immer der gleichen Reihenfolge, auf dem zum Durchlauf-Abkühlofen führenden Förderer abgestellt werden. Diese Maschinen arbeiten ebenfalls mit Formnummern, wodurch dem Herstellungsprozess die gleichen Nachteile anhaften wie beim Einsatz von IS-Glasformmaschinen.

Die DE 100 30 649 A1 befasst sich mit einem Verfahren zur Erfassung, Diagnose, Überwachung und Regelung von Formgebungseigenschaften an IS-Glasformmaschinen. Dabei werden auf der Förderstrecke zwischen der IS-Glasformmaschine und dem Durchlauf-Abkühlofen, also an einer Stelle, an der die Glasartikel noch in der Reihenfolge ihrer Produktion transportiert werden, über Messeinrichtungen Eigenschaften der Glasartikel erfasst. Diese Messdaten werden dann in einer Datenverarbeitungsanlage gespeichert und durch ein Zuordnungsverfahren der jeweiligen Sektion der IS-Glasformmaschine zugeordnet. Zu den erfassten Eigenschaften der Glasartikel gehören Temperaturen und temperaturabhängige Größen sowie zwei-und dreidimensionale Temperaturprofile, geometrische Abmessungen, optische Eigenschaften usw. Die aus den Messdaten oder mittels der Messdaten ermittelten Informationen werden zur Diagnose, Überwachung und Regelung der IS-Glasformmaschine herangezogen. Eine Qualitätskontrolle der erzeugten Glasartikel am Ende des Herstellungsprozesses, also vor der Verpackung, erübrigt sich durch dieses Verfahren nicht.

Aufgabe der vorliegenden Erfindung ist es, ein Verfahren und eine Einrichtung gattungsgemäßer Art zur Überwachung von Glasartikeln zur Verfügung zu stellen, die es gestatten, jeden einzelnen Glasartikel während seines gesamten Herstellungsprozesses durchgängig dokumentieren zu können.

Gelöst wird diese Aufgabe durch ein Verfahren, welches die Merkmale des Anspruchs 1 aufweist bzw. durch eine Einrichtung mit den Merkmalen des Anspruchs 4.

Wie schon weiter oben erwähnt, verlassen die in der Glasformmaschine hergestellten Glasartikel die Produktionseiheiten immer in der gleichen Reihenfolge, so dass an der Stelle, an der die Glasartikel mit einer individuellen Seriennummer versehen werden, bekannt ist, aus welcher Produktionseinheit der Glasformmaschine der jeweilig markierte Glasartikel stammt. Ebenso bekannt ist die Transportzeit eines jeweiligen Glasartikels auf dem Förderer von der Produktionseinheit, in der er hergestellt wurde, bis zur Markierungsstelle. Daraus kann die exakte Uhrzeit der Herstellung des jeweiligen Glasartikels ermittelt werden. Diese Daten, also die Seriennummer, die Produktionseinheit und die Herstellungszeit werden im Prozessrechner miteinander verknüpft. Weist dann später bei der Fehlerprüfung ein Glasartikel einen oder mehrere Fehler auf, so kann diesem Glasartikel nicht nur die Produktionseinheit, in der er erzeugt wurde, zugeordnet werden, was nach dem Stand der Technik auch möglich war, sondern auch noch die exakte Uhrzeit seiner Herstellung.

In weiterer Ausgestaltung der Erfindung bringt die Erfassung der exakten Uhrzeit der Herstellung eines Glasartikels weitere Vorteile. So kann an anhand der exakten Uhrzeit festgestellt werden, welche Produktionsbedingungen bei der Herstellung des jeweiligen Glasartikels vorlagen, z. B. die Temperatur der Form in der jeweiligen Produktionseinheit oder auch die Temperatur des Kühlmittels. Auch diese Daten werden im Prozessrechner mit den schon vorhandenen Daten verknüpft. Erkennen die Kontrollmaschinen am Ende der Fertigungslinie einen defekten Glasartikel, so lässt sich auf diese Weise anhand seiner Seriennummer exakt bestimmen, wann dieser Glasartikel gefertigt wurde und welche übrigen, individuellen Einflüsse bei seiner Fertigung vorherrschten. Aus diesen Angaben können auch Trends abgeleitet werden, z. B. welchen Einfluss Temperaturänderungen an der Form auf die Fehlerhäufigkeit oder aber auf die Ausprägung eines jeweiligen Fehlers haben. Es kann aber auch festgestellt werden, unter welchen Produktionsbedingungen fehlerfreie Glasartikel hergestellt wurden. Diese Angaben können dann zur Optimierung des Herstellungsprozesses herangezogen werden.

Die Erfindung wird nachstehend anhand eines Ausführungsbeispiels mit einer IS-Glasformmaschine erläutert. Die dazugehörige Zeichnung zeigt in schematischer Weise eine Fertigungslinie für Glasartikel.

Bei der Herstellung von Glasartikel in einer IS-Glasformmaschine 1 werden Posten schmelzflüssigen Glases von einem aus einem Speiser austretenden Strang 2 abgetrennt und über einen Tropfenverteiler über ein Rinnensystem 3 abwechselnd verschiedenen Produktionseinheiten, auch Sektionen 4 genannt, zugeführt. Die IS-Glasformmaschine 1 besteht aus mehreren, parallel arbeitenden Sektionen 4, denen die Posten schmelzflüssigen Glases in einer kontinuierlichen, immer wiederkehrenden Reihenfolge zugeführt werden. Die einzelnen Sektionen 4 arbeiten mit gleichen Arbeitstakten, so dass die in ihnen geformten Glasartikel 5 die Sektionen 4 ebenfalls in dieser immer wiederkehrenden Reihenfolge verlassen und auf ein Förderband 6 aufgestellt werden. Die Reihenfolge des Ausstoßes der Glasbehälter 5 aus den Sektionen 4 ist dabei so gewählt, dass die Glasbehälter 5 behinderungsfrei auf das Förderband 6 aufgestellt werden können und gleiche Abstände voneinander haben.

Das Förderband 6 fördert die noch heißen Glasartikel 5 in Richtung eines Pfeils 7 zu einem Durchlauf-Abkühlofen 8. Auf der Förderstrecke des Förderbandes 6 zwischen der IS-Glasformmaschine 1 und dem Durchlauf-Abkühlofen 8 ist eine Markiervorrichtung 9 angeordnet. Diese Markiervorrichtung 9 besitzt ein Reservoir für fluoreszierende Farbe, ein Pumpsystem sowie einem Düsensystem über das programmgesteuert fortlaufende Seriennummern auf die einzelnen, auf dem Förderband 6 vorbeigeförderten Glasartikel 5 mit der Farbe aufgesprüht werden. Fluoreszierende Farbe hat u.a. den Vorteil, dass die Seriennummer beim normalen Gebrauch des Glasartikel nicht oder kaum zusehen ist, das optische Erscheinungsbild des Glasartikels also nicht stört.

Die vergebenen Seriennummern werden von der Markiervorrichtung 9 über eine Datenleitung 10 einem Prozessrechner 11 übermittelt. Da die Glasartikel 5 an der Markierungsvorrichtung 9, bezogen auf die Sektionen 4, in immer der gleichen Reihenfolge vorbeikommen, ist eine Zuordnung der jeweiligen Seriennummer zu der Sektion 4, in der der jeweilige Glasartikel 5 geformt wurde, möglich. Diese Information, d. h. die Verknüpfung einer bestimmten Seriennummer mit einer bestimmten Sektion 4 wird im Speicher des Prozessrechners 11 abgelegt. Ebenfalls bekannt ist die genaue Uhrzeit der Herstellung der Glasartikel 5 in den jeweiligen Sektionen 4. Diese Uhrzeit wird mit der jeweiligen Seriennummer und Sektion 4 verknüpft und ebenfalls im Speicher des Prozessrechners 11 abgelegt.

Der Prozessrechner 11 ist über eine weitere Datenleitung 12 mit der IS-Glasformmaschine 1 verbunden. Über diese Datenleitung 12 werden Messdaten der IS-Glasformmaschine 1, die über entsprechende Messeinrichtungen erfasst werden, so z. B. die Temperaturen der Formen in den einzelnen Sektionen 4, an den Prozessrechner 11 als Funktion über der Uhrzeit übermittelt. Diese Daten können daher einem bestimmten Glasartikel 5 mit einer bestimmten Seriennummer zugeordnet werden, da dessen Herstellungszeit bekannt ist.

Das Förderband 6 fördert die Glasbehälter 5 unter Bildung einer Vielzahl von parallelen Reihen dem Durchlauf-Abkühlofen 8 zu. Dieser wird in Richtung des Pfeils 13 durchlaufen. In dem Durchlauf-Abkühlofen 8 werden die Glasartikel 5 abgekühlt und entspannt. Am Ausgang des Durchlauf-Abkühlofens 8 werden die Glasartikel 5 über Tische 14 und Förderbänder 15 nicht mehr synchron zur Reihenfolge ihrer Herstellung Kontrollmaschinen 16 zugeführt. Diese Kontrollmaschinen 16 prüfen die Glasartikel 5 nach verschiedenen Kriterien auf Defekte. Sie sind mit einem Lesegerät 17 zur Erfassung der Seriennummer ausgestattet. Das Prüfergebnis eines Glasartikels 5 wird zusammen mit seiner Seriennummer über eine Datenleitung 18 an den Prozessrechner 11 übermittelt, so dass nun im Speicher des Prozessrechners 11 zu den bereits für einen bestimmten Glasartikel 5 gespeicherten Daten noch die Daten der Fehlerprüfung hinzukommen.

Mit diesen gespeicherten Daten ist es möglich, nicht nur einem bestimmten Glasartikel 5 eine bestimmte Sektion 4 der IS-Glasformmaschine 1 zuzuordnen, sondern über die erfasste Uhrzeit der Herstellung eines Glasartikels 5 festzustellen, unter welchen Produktionsbedingungen der jeweilige Glasartikel 5 hergestellt worden ist. Daraus können Rückschlüsse gezogen werden, welche Prozessdaten zu fehlerhaften Glasartikeln 5 oder aber auch zu einwandfreien Glasartikeln 5 geführt haben.

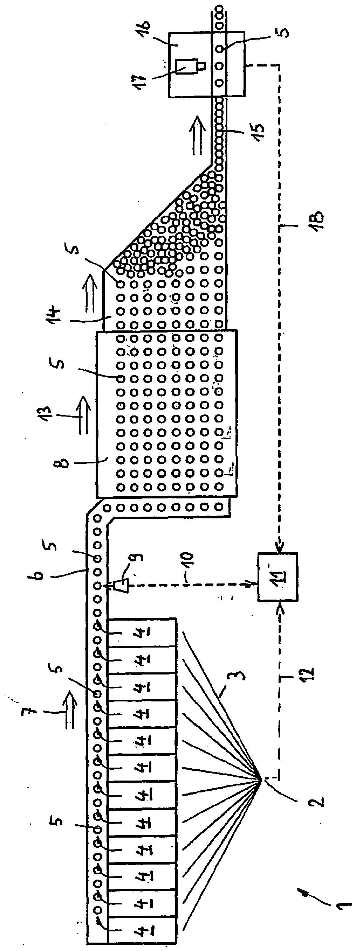

## Patentansprüche

1. Verfahren zur Überwachung von Glasartikeln, die in einer Glasformmaschine mit mehreren Produktionseinheiten hergestellt werden und, bezogen auf die Produktionseinheiten, in immer gleicher Reihenfolge über eine Förderstrecke einem Durchlauf-Abkühlofen zugeführt und anschließend einer Fehlerprüfung unterzogen werden, **dadurch gekennzeichnet, dass** jeder Glasartikel (5) beim Durchlaufen der Förderstrecke (6) zwischen der Glasformmaschine (1) und dem Durchlauf-Abkühlofen (8) eine Markierung mit einer individuellen Seriennummer erhält, der Daten aus dem Herstellungsprozess des betreffenden Glasartikels (5) zugeordnet werden.

2. Verfahren nach Anspruch 1, **dadurch gekennzeichnet, dass** zu den einer jeweiligen Seriennummer zugeordneten Daten die Produktionseinheit (4) der Glasformmaschine (1), in der der jeweilige Glasartikel (5) hergestellt wurde, die Uhrzeit der Herstellung des Glasartikels (5) und die während der Herstellung des Glasartikels (5) in der jeweiligen Produktionseinheit (4) erfassten Messdaten gehören.

3. Verfahren nach Anspruch 1 oder 2, **dadurch gekennzeichnet, dass** die Seriennummern mit einer fluoreszierenden Farbe aufgebracht werden.

4. Einrichtung zur Überwachung von Glasartikeln in einer Fertigungslinie, mit einer Glasformmaschine, die mehrere Produktionseinheiten aufweist, einem Durchlauf-Abkühlofen und sich diesen anschließenden Kontrollvorrichtungen, wobei zwischen der Glasformmaschine und dem Durchlauf-Abkühlofen ein Förderer angeordnet ist, auf dem die Glasartikel, bezogen auf die Produktionseinheiten, in immer gleicher Reihenfolge stehen, **gekennzeichnet durch**,
- eine im Verlauf des Förderers (6) angeordnete Markiervorrichtung (9), die jeden Glasartikel (5) mit einer individuellen Seriennummer versieht,
- in die Kontrollvorrichtungen (16) integrierte Lesegeräte (17) für die Seriennummern,
- einen Prozessrechner (11), der über Datenleitungen (10, 18) mit der Markiervorrichtung (9) und den Kontrollvorrichtungen (16) verbunden ist und die übermittelten Daten zur Auswertung miteinander verknüpft.

5. Einrichtung nach Anspruch 4, **dadurch gekennzeichnet, dass** der Prozessrechner (11) zusätzlich mit der Glasformmaschine (1) über eine Datenleitung (12) verbunden ist, über die er bei der Herstellung in den einzelnen Produktionseinheiten (4) erfasste Messdaten als Funktionen über die Uhrzeit erhält und mit den bereits gespeicherten Daten verknüpft.

6. Einrichtung nach Anspruch 4 oder 5, **dadurch gekennzeichnet, dass** die Markierungsvorrichtung (9) ein Spritzautomat ist, der programmgesteuert über ein Düsensystem fortlaufende Seriennummern auf die an ihm vorbeigeführten Glasartikel (5) mit fluoreszierender Farbe aufträgt.

## Claims

1. Method of monitoring glass items which are manufactured in a glass-moulding machine and are fed, via a conveying stage, in a constantly identical sequence, referred to the production units, to a continuous annealing lehr and are then subjected to defect detection,
**characterised in that**
each glass item (5) is provided, on passing through the conveying stage (6) between the glass-moulding machine (1) and the continuous annealing lehr (8), with a mark having an individual serial number with which data from the process of manufacture of the glass item (5) in question are associated.

2. Method according to claim 1,
**characterised in that**
data associated with a particular serial number include the production unit (4) of the glass-moulding machine (1) in which the particular glass item (5) has been manufactured, the time of manufacture of said glass item (5) and the measurement data acquired during the manufacture of the glass item (5) in the particular production unit (4).

3. Method according to claim 1 or 2,
**characterised in that**
the serial numbers are applied with fluorescent paint.

4. Device for monitoring glass items in a production line, having a glass-moulding machine which has a number of production units, a continuous annealing lehr and control apparatuses following the latter, wherein there is arranged, between the glass-moulding machine and the continuous annealing lehr, a conveyor on which the glass items stand in a constantly identical sequence, referred to the production units, **characterised by**
- a marking apparatus (9) which is arranged in the path of the conveyor (6) and which provides each glass item (5) with an individual serial number;
- readers, which are integrated into the control apparatuses, for the serial numbers;
- a process computer (11) which is connected to the marking apparatus (9) and the control apparatuses (16) via data lines (10, 18) and links the communicated data with each other for evaluation purposes.

5. Device according to claim 4,
**characterised in that**
the process computer (11) is additionally connected to the glass-moulding machine (1) via a data line (12), via which said computer receives, as functions over time, measurement data acquired in the course of manufacture in the individual production units (4) and links them with the data already stored.

6. Device according to claim 4 or 5,
**characterised in that** the marking apparatus (9) is an automatic spraying machine which applies consecutive serial numbers, with fluorescent paint via a nozzle system in a program-controlled manner, to the glass items (5) conveyed past it.

## Revendications

1. Procédé de contrôle d'articles en verre qui sont fabriqués dans une machine à former du verre comprenant plusieurs unités de production et, toujours dans le même ordre par rapport aux unités de production, amenés à un four de refroidissement continu en suivant un parcours de convoyage, puis soumis à une détection de défauts, **caractérisé en ce qu'**un marquage avec un numéro de série individuel, auquel des données issues du processus de fabrication de l'article en verre concerné (5) sont associées, est appliqué à chaque article en verre (5) lorsqu'en suivant le parcours de convoyage (6) il passe entre la machine à former du verre (1) et le four de refroidissement continu (8).

2. Procédé suivant la revendication 1, **caractérisé en ce que** l'unité de production (4) de la machine à former du verre (1), dans laquelle l'article en verre respectif (5) a été fabriqué, l'heure de fabrication de l'article en verre (5) et les données de mesure saisies lors de la fabrication de l'article en verre (5) dans l'unité de production (4) respective font partie des données associées à un numéro de série respectif,

3. Procédé suivant la revendication 1 ou 2, **caractérisé en ce que** les numéros de série sont appliqués avec une peinture fluorescente.

4. Dispositif de contrôle d'articles en verre dans une chaîne de fabrication comprenant une machine à former du verre qui présente plusieurs unités de production, un four de refroidissement continu et des dispositifs de contrôle disposés à la suite, un convoyeur étant prévu entre la machine à former du verre et le four de refroidissement continu, sur lequel les articles en verre se trouvent toujours dans le même ordre par rapport aux unités de production, **caractérisé par**
- un dispositif de marquage (9) qui est disposé sur le parcours du convoyeur (6) et applique à chaque article en verre (5) un numéro de série individuel,
- des lecteurs (17) intégrés dans les dispositifs de contrôle (16) pour les numéros de série,
- un calculateur de processus (11) qui est relié au dispositif de marquage (9) et aux dispositifs de contrôle (16) via des lignes de données (10, 18) et combine les données transmises en vue de leur évaluation.

5. Dispositif suivant la revendication 4, **caractérisé en ce que** le calculateur de processus (11) est en plus relié à la machine à former du verre (1) via une ligne de données (12) par l'intermédiaire de laquelle il obtient les données de mesure saisies lors de la fabrication dans les différentes unités de production (4) en tant que fonctions relatives à l'heure et les combine avec les données déjà mémorisées.

6. Dispositif suivant la revendication 4 ou 5, **caractérisé en ce que** le dispositif de marquage (9) est une machine de projection qui applique des numéros de série d'ordre de façon commandée par programme au moyen d'un système à buses avec une peinture fluorescente sur les articles en verre (5) passant devant elle.
